# EUROPÄISCHE PATENTANMELDUNG

(11) **EP 2 837 929 A2**
(43) Veröffentlichungstag der Anmeldung: **18.02.2015**
(21) Anmeldenummer: 14190721.2
(22) Anmeldetag: 27.04.2007
(51) Int. Cl.: G01N 21/64, G02B 21/16, G02B 27/58

(54) **Verfahren und Fluoreszenzlichtmikroskop zum räumlich hochauflösenden Abbilden einer Struktur einer Probe**

(30) Priorität: 06.05.2006 DE 102006021317
(62) Teilanmeldung aus: 07724644.5
(71) Anmelder: Max-Planck-Gesellschaft zur Förderung der Wissenschaften e.V., 80539 München (DE)
(72) Erfinder: Hell, Professor Dr. Stefan W., 37085 Göttingen (DE)
(74) Vertreter: REHBERG HÜPPE + PARTNER

(57) **Zusammenfassung**

Zum räumlich hochauflösenden Abbilden einer interessierenden Struktur einer Probe werden die Schritte durchgeführt: Auswählen einer Substanz aus einer Gruppe von Substanzen, die mit einem Umschaltsignal wiederholt aus einem ersten Zustand, in dem sie nicht fluoreszent sind, in einen zweiten Zustand, in dem sie mit einem optischen Anregungssignal zur spontanen Emisson von Fluoreszenzlicht anregbar sind, überführbar sind und die aus dem zweiten Zustand in den ersten Zustand zurückkehren können; Markieren der interessierenden Struktur der Probe mit der Substanz; Überführen wechselnder Anteile der Substanz mit dem Umschaltsignal in den zweiten Zustand; Anregen der Substanz in dem zweiten Zustand durch das optische Anregungssignal zur spontanen Emission von Fluoreszenzlicht; Abbilden der Probe auf ein Sensorarray, wobei eine räumliche Auflösungsgrenze der Abbildung größer (also schlechter) ist als ein mittlerer Abstand zwischen nächst benachbarten Molekülen der Substanz in der Probe, und räumlich aufgelöstes Registrieren des spontan emittierten Fluoreszenzlichts als ein optisches Messsignal, das von dem jeweiligen Anteil der Substanz in dem zweiten Zustand ausgeht, mit dem Sensorarray. Beim Überführen des Anteils der Substanz in den zweiten Zustand wird eine Intensität des Umschaltsignals so eingestellt, dass mindestens 10 % der jeweils in den zweiten Zustand überführten Moleküle einen Abstand zu den ihnen nächst benachbarten Molekülen in dem zweiten Zustand aufweisen, der größer als die räumliche Auflösungsgrenze der Abbildung der Probe auf das Sensorarray ist. Dabei wird das von den Molekülen in dem zweiten Zustand, die einen kleineren Abstand voneinander aufweisen, ausgehende Messsignal von dem Messsignal getrennt, das von den Molekülen in ausreichendem Abstand zueinander ausgeht, und nur für den Fall dass eine Entsprechung zu einem einzelnen Molekül vorliegt, erfolgt eine Bestimmung der Ortslage dieses Moleküls aus der Intensitätsverteilung des Messsignals über das Sensorarray (6).

## Beschreibung

### TECHNISCHES GEBIET DER ERFINDUNG

Die Erfindung bezieht sich auf ein Verfahren zum räumlich hochauflösenden Abbilden einer Struktur einer Probe mit den Schritten des Oberbegriffs des Patentanspruchs 1. Darüber hinaus betrifft die Erfindung ein Fluoreszenzlichtmikroskop zur Durchführung dieses Verfahrens mit den Merkmalen des Oberbegriffs des Patentanspruchs 15.

### STAND DER TECHNIK

Aus der WO 2004/090617 ist ein Verfahren bekannt, bei dem beim Überführen der Substanz mit dem Umschaltsignal in den zweiten Zustand jeweils nur ein definierter räumlicher Bereich der Probe gezielt ausgelassen wird. Dieser Bereich ist ein Intensitätsminimum eines Interferenzmusters mit Nullstelle, und die Intensität des Umschaltsignals ist bereits überall im Umfeld der Nullstelle so groß, dass sie einen Sättigungsgrenzwert für das vollständige Umschalten der Substanz in den zweiten Zustand überschreitet. Auf diese Weise kann ein optisches Messsignal, das von dem jeweils in dem ersten Zustand verbliebenen Anteil der Substanz ausgeht, dem gezielt mit dem Umschaltsignal ausgelassenen Bereich der Probe zugeordnet werden. Damit hängt die räumliche Auflösung beim Abbilden der interessierenden Struktur der Probe, die mit der Substanz markiert ist, nicht mehr von der räumlichen Auflösungsgrenze der Abbildung der Probe auf das verwendete Sensorarray ab. Vielmehr wird die räumliche Auflösung durch die Ausdehnung der Nullstelle des Umschaltsignals definiert, innerhalb derer sich die Substanz noch in dem ersten Zustand befindet, da aus dem Umfeld der Nullstelle kein Messsignal kommen kann und entsprechend auch nicht einer von der Nullstelle zu trennenden räumlichen Position zugeordnet werden muss. Im Ergebnis ist es beim räumlichen Abbilden der interessierenden Struktur einer Probe möglich, die Auflösungsgrenze (d.h. die beugungsbedingte Abbe'sche Grenze gegeben durch die Wellenlänge des Lichts geteilt durch die doppelte numerische Apertur), die grundsätzlich die räumliche Auflösung abbildender optischer Verfahren beschränkt und die direkt von der Wellenlänge des langwelligsten relevanten optischen Signals abhängt, zu unterschreiten.

Die Bestimmung der Lage der Nullstelle des Umschaltsignals innerhalb der Probe kann aus der Intensitätsverteilung des Messsignals über dem Sensorarray mit höherer Genauigkeit als der räumlichen Auflösungsgrenze der Abbildung erfolgen, soweit feststeht, dass das Messsignal nur aus dem Bereich dieser einen Nullstelle stammt. Die bei der Ortslagebestimmung erzielbare Genauigkeit hängt neben der Größe der Nullstelle im Wesentlichen nur von der Dichte der Pixel des Sensorarrays, bei dem es sich üblicherweise um eine CCD- oder CMOS-Kamera handelt, sowie dem erzielten Signal-zu-Rausch-Verhältnis und der Breite der Punktbildfunktion der Abbildung ab. Konkret liegt die erreichbare Genauigkeit bei der Ortslagebestimmung sogar weit unter dem Abstand der Pixel des Sensorarrays geteilt durch den Abbildungsmaßstab; bei gutem Signal-zu-Rausch-Verhältnis sogar weit unter einem Nanometer, was dem Fachmann bekannt ist

Dieses Phänomen wird bekanntermaßen auch bei der Lokalisation einzelner fluoreszierender Moleküle in einer Probe ausgenutzt. Voraussetzung ist hierbei jedoch, dass die einzelnen fluoreszierenden Moleküle einen Abstand zu den ihnen jeweils nächst benachbarten Molekülen aufweisen, der größer als die räumliche Auflösungsgrenze der Abbildung der Probe auf das Sensorarray ist, weil anderenfalls die von dem Sensorarray empfangenen optischen Messsignale von den einzelnen fluoreszierenden Molekülen miteinander verschmelzen. Wenn dies geschieht, können die Positionen der einzelnen Moleküle nicht mehr ohne weiteres bestimmt werden.

Bei dem aus der WO 2004/090617 A2 bekannten und allen anderen Verfahren, bei denen eine interessierende Struktur einer Probe mit einer ein Messsignal aussendenden Substanz, also insbesondere einer fluoreszierenden Substanz, markiert ist, ist die Dichte der Moleküle der Substanz in der Probe regelmäßig so groß, dass der Abstand der einzelnen Moleküle von ihren nächsten Nachbarn nur einem kleinen Bruchteil der räumlichen Auflösungsgrenze einer Abbildung der Probe auf das Sensorarray entspricht.

Aus der nachveröffentlichten WO 2006/127692 A2 ist ein Verfahren mit den Merkmalen des Oberbegriffs des Patentanspruchs 1 bekannt, bei dem beim Überführen des Anteils der Substanz in den zweiten Zustand eine Intensität des Umschaltsignals so eingestellt wird, dass ein mittleres Volumen pro in den zweiten Zustand überführtes Molekül der Substanz größer oder ungefähr gleich einem brechungsbegrenzten Auflösungsvolumen bei der Abbildung ist. Dies ist gleichbedeutend damit, dass zumindest ein wesentlicher Anteil der in den zweiten Zustand überführten Moleküle der Substanz einen Abstand zu den ihnen nächst benachbarten Molekülen in dem zweiten Zustand aufweisen, der größer als die räumliche Auflösungsgrenze der Abbildung der Probe auf das Sensorarray ist. Die Moleküle der Substanz werden als phototransformierbare optische Markierungen bezeichnet, die mit einem Strahlungssignal in den zweiten Zustand überführt werden. Nicht offenbart ist in der WO 2006/127692 A2, aber insbesondere, dass das von Molekülen in dem zweiten Zustand, die einen kleineren Abstand voneinander aufweisen, ausgehende Messsignal von dem Messsignal getrennt wird, das von den Molekülen in ausreichendem Abstand zueinander ausgeht und dass dazu geprüft wird, ob eine Gesamtintensität des Messsignals, eine Form und/oder eine Fläche der Intensitätsverteilung des Messsignals über dem Sensorarray einem einzelnen oder mehreren Molekülen entspricht, und dass nur für den Fall, dass eine Entsprechung zu einem einzelnen Molekül vorliegt, die Bestimmung der Ortslage dieses Moleküls aus der Intensitätsverteilung erfolgt.

Am 21.04.2006 hat Eric Betzig, einer der Erfinder der WO 2006/127692 A2, auf der Konferenz "Frontieres in Life Cell Imaging" im Natcher Conference Center, National Institute of Health, Bethesda, Maryland, USA, einen Vortrag "New Approaches to Cellular Imaging with High Spatial and Temporal Resolution" gehalten. In diesem Vortrag beschreibt er eine Ausführungsform des später in der WO 2006/127692 A2 veröffentlichten Verfahrens zum räumlich hochauflösenden Abbilden einer interessierenden Struktur einer Probe. Die interessierende Struktur wird gentechnisch mit Markern markiert, welche mit einem optischen Einschaltsignal aus einem nicht fluoreszenten ersten Zustand in einen fluoreszenten zweiten Zustand überführbar sind. Von diesen Markern wird mit einem Puls des Einschaltsignals ein kleiner Anteil in den zweiten Zustand überführt, wobei die in den zweiten Zustand überführten Moleküle einen größeren Abstand als die räumliche Auflösungsgrenze bei der Abbildung der Probe auf eine CCD-Kamera aufweisen. Die in den zweiten Zustand überführten Marker werden anschließend mit Anregungslicht beaufschlagt, um Fluoreszenzlicht mit der CCD-Kamera von ihnen zu registrieren. Dies geschieht solange, bis die in den zweiten Zustand überführten Moleküle weggebleicht sind. Dann wird ein anderer Anteil der Marker mit einem nächsten Puls des Einschaltsignals in den zweiten Zustand überführt. Das so über viele Stunden hinweg mit der Kamera registrierte Fluoreszenzlicht von verschiedenen Markern kann der Position der einzelnen Marker mit hoher Ortsauflösung zugeordnet werden. Herr Betzig bezeichnet in seinem Vortrag ein Blinken von Molekülen, als großes Problem beim Erhalten einer ausreichend großen Anzahl von Photonen von den Markern. Er sieht Möglichkeiten, die Algorithmen zu optimieren, dass sie auch bei dichter gepackten Molekülen in der Probe noch zu einer korrekten Isolierung der Moleküle führen.

### AUFGABE DER ERFINDUNG

Der Erfindung liegt die Aufgabe zugrunde, ein Verfahren nach dem Oberbegriff des Patentanspruchs 1 und eine Vorrichtung zur Durchführung solcher Verfahren nach dem Oberbegriff des Patentanspruch 15 aufzuzeigen, mit denen die Beugungsgrenze beim Abbilden der interessierenden Struktur der Probe unterschreitbar ist, ohne dass hierfür das Umschaltsignal mit einer räumlich fein strukturierten Intensitätsverteilung auf die Probe aufgebracht werden muss.

### LÖSUNG

Die Aufgabe der Erfindung wird durch ein Verfahren mit den Merkmalen des Patentanspruchs 1 und durch eine Vorrichtung mit den Merkmalen des Patentanspruchs 15 gelöst. Bevorzugte Ausführungsformen des Verfahrens gemäß dem Patentanspruch 1 sind in den abhängigen Patentansprüchen definiert.

### BESCHREIBUNG DER ERFINDUNG

Bei dem neuen Verfahren gemäß dem Patentanspruch 1, bei dem das optische Messsignal registriert wird, das von dem jeweiligen Anteil der Substanz in dem zweiten Zustand ausgeht, wird beim Überführen des Anteils der Substanz in den zweiten Zustand eine Intensität des Umschaltsignals so eingestellt, dass ein wesentlicher Prozentsatz der jeweils in den zweiten Zustand überführten Moleküle einen Abstand zu den ihnen nächst benachbarten Molekülen in dem zweiten Zustand aufweist, der größer als die räumliche Auflösungsgrenze der Abbildung der Probe auf das Sensorarray ist. Für jedes Molekül der Substanz, das zu diesem wesentlichen Prozentsatz gehört, kann seine Lage in der Probe aus der Intensitätsverteilung des von ihm ausgehenden optischen Messsignals über das Sensorarray mit der bereits grundsätzlich bekannten extrem hohen Ortsauflösung, die die räumliche Auflösungsgrenze der Abbildung der Probe auf das Sensorarray deutlich unterschreitet, bestimmt werden. Diese lässt aber auch die Abbildung der mit der Substanz markierten interessierenden Struktur der Probe mit dieser extrem hohen Ortsauflösung zu. Es müssen nur immer wieder andere Moleküle der Substanz in den zweiten Zustand überführt werden, wobei diese Moleküle zu dem Wesentlichen Prozentsatz der Moleküle der Substanz in dem zweiten Zustand gehören, in dem diese einen Abstand zu den ihnen nächst benachbarten Molekülen in dem zweiten Zustand aufweisen, der größer als die räumliche Auflösungsgrenze der Abbildung der Probe auf das Sensorarray ist. Dies stellt aber kein Problem dar, da die Auswahl der Moleküle, für die diese Bedingung zutrifft, auf Übergangswahrscheinlichkeiten beruht und damit statistischen Gesetzmäßigkeiten gehorcht. Da man mit jedem Umschaltzyklus statistisch gesehen eher andere Moleküle der Substanz in den zweiten Zustand schaltet, wird die mit der Substanz markierten Struktur der Probe mit immer höherer Dichte nach der Position einzelnen Moleküle der Substanz abgefragt. Die Summe dieser Positionen ist die mit dem neuen Verfahren gewonnene Abbildung der interessierenden Struktur, die die Ortsauflösung weit jenseits der üblichen Auflösungsgrenze aufweist. Dabei mögen zwar einzelne Moleküle wiederholt zu der Auswahl gehören, die dem hier aufgestellten Kriterium genügt. Gerade dann, wenn immer nur ein vergleichsweise kleiner Anteil der in dem betrachteten Bereich der Probe insgesamt vorhandenen Moleküle in den zweiten Zustand überführt wird und das Abstandkriterium erfüllt, ist der Anteil der Moleküle, deren genaue Ortslage mehrfach bestimmbar wird, gegenüber den Molekülen, die auch bei einem häufigen Wiederholen des Überführens des Anteils der Substanz in den zweiten Zustand nur einmal zu dem wesentlichen Prozentsatz gehören, für den eine genaue Bestimmung der Ortslage möglich ist, vernachlässigbar. Selbst wenn dieser Anteil größer ist, wird hierdurch allenfalls die Effizienz, d.h. insbesondere die Geschwindigkeit, nicht aber die Funktion des neuen Verfahrens beeinträchtigt. Dem liegt zugrunde, dass durch die Selektion der Moleküle für die Ortsbestimmung mit höchster Ortsauflösung aufgrund von Übergangswahrscheinlichkeiten die Gesamtheit der Moleküle, deren Ortsbestimmung erfolgt, bei ausreichend großer Anzahl, d.h. ausreichend großem Stichprobenumfang, aus statistischen Gesetzmäßigkeiten repräsentativ für die Gesamtheit der in der Probe vorhandenen Moleküle der Substanz und damit für die mit dieser markierten interessierenden Struktur der Probe ist. Um aus der Intensitätsverteilung des von einem Molekül der Substanz in dem zweiten Zustand kommenden Messsignals über das Sensorarray die Lage des Moleküls in der Probe mit einer höheren Ortsauflösung als der räumlichen Auflösungsgrenze der Abbildung der Probe auf das Sensorarray bestimmen zu können, versteht es sich, dass das Rastermaß der Pixel des Sensorarrays zumindest kleiner sein muss als die räumlichen Auflösungsgrenze mal dem Abbildungsfaktor der Abbildung. Bevorzugt ist das Rastermaß nur maximal halb so groß wie die räumliche Auflösungsgrenze mal dem Abbildungsfaktor der Abbildung, so dass das von einem Molekül ausgehende Messsignal auf mindestens vier Pixel des Sensorarrays verteilt ist. Ein viel kleineres Rastermaß der Pixel des Sensorarrays ist mit keiner entsprechenden Steigerung der Ortsauflösung bei der Bestimmung der Lage der Moleküle in der Probe mehr verbunden. Vielmehr besteht die Gefahr, dass das Signal-zu-Rausch-Verhältnis deutlich schlechter wird. Ein Rastermaß, das zwischen 60 und 10 % der räumlichen Auflösungsgrenze mal dem Abbildungsfaktor der Abbildung liegt, wird daher in der Regel am günstigsten sein.

Der wesentliche Prozentsatz der jeweils zu einem Zeitpunkt in den zweiten Zustand überführten Moleküle, der das Kriterium des größeren Abstands der Moleküle in dem zweiten Zustand als die räumliche Auflösungsgrenze der Abbildung der Probe auf das Sensorarray erfüllt, beträgt mindestens 10 %. Insbesondere, wenn der hiezu komplementäre Prozentsatz der Moleküle in dem zweiten Zustand, die einen kleineren Abstand voneinander aufweisen, vergleichsweise groß ist, ist es wichtig, dass von diesem ausgehende Messsignal bzw. dessen Intensitätsverteilung über das Sensorarray von dem Messsignal zu trennen, das von den Molekülen in ausreichendem Abstand zueinander ausgeht. Dies kann dadurch erfolgen, dass geprüft wird, ob die Gesamtintensität des Messsignals, die Form und/oder die Fläche der Intensitätsverteilung des Messsignals über dem Sensorarray einem einzelnen oder mehreren Molekülen entspricht. Nur für den Fall, dass eine Entsprechung zu einem einzelnen Molekül vorliegt, erfolgt dann die Bestimmung der Ortslage dieses Moleküls aus der Intensitätsverteilung. Es versteht sich, dass es sinnvoll ist, für einen möglichst großen prozentualen Anteil der registrierten lokalen Intensitätsverteilungen Ortslagen einzelner Moleküle der Substanz und damit Positionen der Interessierenden Struktur der Probe bestimmen zu können. Aus diesem Grund ist es bevorzugt, wenn ein möglichst großer Prozentsatz der jeweils in den zweiten Zustand überführten Moleküle den notwendigen großen Abstand zu benachbarten Molekülen in dem zweiten Zustand aufweist. Im Patentanspruch 2 ist eine aufsteigende Folge von Prozentsätzen angeführt, die in dieser Reihenfolge in zunehmendem Maße präferiert werden. Es macht jedoch wenig Sinn, zu versuchen, für alle in den zweiten Zustand überführten Moleküle zu verhindern, dass diese keinen Nachbarn aufweisen, der sich ebenfalls in dem zweiten Zustand befindet und dessen Abstand kleiner als die räumliche Auflösungsgrenze der Abbildung der Probe auf das Sensorarray ist, weil dabei der mittlere Abstand der Moleküle, die sich jeweils in dem zweiten Zustand befinden dürfen, sehr groß wird, was zur Folge hat, dass die Anzahl der Ortslagen von Molekülen, die nach einem Umschaltvorgang in den zweiten Zustand bestimmt werden können, wieder abnimmt. Mit welcher Intensität des Umschaltsignals die interessierende Struktur der Probe letztlich am schnellsten, d. h. mit den wenigsten Wiederholungen des Umschaltvorgangs, abgebildet werden kann, hängt letztlich davon ab, wie groß der Aufwand dafür ist, zwischen einer Intensitätsverteilung des Messsignals über das Sensorarray zu unterscheiden, die nur einem Molekül in dem zweiten Zustand oder zwei oder mehreren benachbarten Molekülen in dem zweiten Zustand zuzuordnen ist.

Da das neue Verfahren ohne eine räumliche Strukturierung des Umschaltsignals im Bereich der Probe auskommt, kann das Umschaltsignal grundsätzlich auch ein nicht-optisches Signal sein, obwohl ein optisches Umschaltsignal auch wegen seiner einfacheren Handhabbarkeit bevorzugt ist. Mit einem optischen Umschaltsignal können beispielsweise unterschiedliche Bereiche der Probe leicht mit unterschiedlichen Intensitäten des Umschaltsignals beaufschlagt werden, um dafür Rechnung zu tragen, dass die Substanz, mit der die interessierende Struktur der Probe markiert ist, in diesen unterschiedlichen Bereichen in stark unterschiedlichen Konzentrationen vorliegt. Dennoch wird es immer so sein, dass die Intensität des Umschaltsignals bei dem neuen Verfahren über Bereiche die größere Abmessungen als die räumliche Auflösungsgrenze der Abbildung der Probe auf das Sensorarray haben, einen konstanten Wert aufweist. Dieser konstante Wert kann konkret umgekehrt proportional zu einer mittleren lokalen Konzentration der Substanz in diesem Bereich der Probe festgelegt werden. Um diese Konzentration zu bestimmen, kann zunächst ein größerer Anteil der Substanz in den zweiten Zustand überführt werden als später bei der Ortsbestimmung einzelner Moleküle, wozu auch eine größere Intensität des Umschaltsignals eingestellt wird als bei der Positionsbestimmung der einzelnen Moleküle mit dem Sensorarray. Die sich damit ergebene Intensitätsverteilung des Messsignals über dem Sensorarray entspricht der Konzentrationsverteilung der zweiten Substanz über die Probe, wobei die Ortsauflösung dieser Konzentrationsverteilung durch die räumliche Auflösungsgrenze der Abbildung der Probe auf das Sensorarray bestimmt ist.

Um sehr schnell festzustellen, ob das aus einem Bereich der Probe, der mehreren Pixeln des Sensorarrays entspricht, stammende Messsignal einem oder mehreren Molekülen der Substanz zuzuordnen ist, so dass es sich lohnt, eine Intensitätsverteilung des Messsignals aufzuzeichnen, um hieraus eine Ortsbestimmung eines einzelnen Moleküls vorzunehmen, oder nicht, kann dieser Bereich parallel zu dem Sensorarray auf einen Photodetektor abgebildet werden, mit dem die zeitliche Abfolge der Emission einzelner Photonen aus dem Bereich beobachtbar ist. Wenn sich nur ein einzelnes Molekül in dem Bereich in dem zweiten Zustand befindet, weisen die von diesem emittierten Photonen des Messsignals einen zeitlichen Mindestabstand auf, weil das Molekül in einem Zyklus seiner Anregung jeweils nur ein Photon emittieren kann. Entsprechend weisen kürzer aufeinanderfolgende Photonen darauf hin, dass diese von mehreren Molekülen emittiert wurden, die sich in dem Bereich in dem zweiten Zustand befinden. In diesem Fall kann der Vorgang der Aufzeichnung der Intensitätsverteilung des Messsignals abgebrochen und erneut versucht werden, in dem Bereich nur ein einziges Molekül der Substanz in den zweiten Zustand zu schalten. Der Photodetektor für das Beobachten der zeitlichen Abfolge der Emission einzelner Photonen aus dem Bereich kann eine einzige Detektoreinheit aufweisen, wenn deren Totzeit nach dem Registrieren eines ersten Photons hinreichend kurz ist. Ansonsten sollte der Photodetektor aus zwei Detektoreinheiten aufgebaut sein, mit denen im Sinne eines Koinzidenzdetektors gezielt nach quasi gleichzeitig emittierten Photonen aus dem Bereich gesucht wird. Diese sind ein Hinweis auf mehrere sich gleichzeitig in dem Bereich in dem zweiten Zustand befindliche Moleküle der Substanz.

Wie schon in der bisherigen Beschreibung der Erfindung angedeutet wurde, bezieht sich diese insbesondere auf solche Ausführungsformen des neuen Verfahrens, bei denen die Substanz aus einer Untergruppe von Substanzen ausgewählt wird, die in dem zweiten Zustand mit einem optischen Anregungssignal zur spontanen Emission von Fluoreszenzlicht anregbar sind, das mit dem Sensorarray als optisches Messsignal registriert wird.

Weiterhin kann die Substanz aus einer Untergruppe von Substanzen ausgewählt werden, die mit einem optischen Rückschaltsignal aus dem zweiten Zustand zurück in den ersten Zustand überführbar sind. In diesem Fall kann vor dem Überführen eines anderen Anteils der Substanz mit dem Umschaltsignal in den zweiten Zustand der zuvor in den zweiten Zustand überführte Anteil der Substanz mit dem Rückschaltsignal gezielt in den ersten Zustand zurück überführt werden. Es muss damit kein Zeitraum abgewartet werden, binnen dessen die Moleküle der Substanz aus dem zweiten Zustand beispielsweise aufgrund thermischer Anregung oder auch unter dem Einfluss des optischen Anregungssignals, das hier primär zur spontanen Emission von Fluoreszenzlicht anregen soll, in den ersten Zustand zurückgekehrt sind. Wenn jedoch die Halbwertszeit der Moleküle der Substanz in dem zweiten Zustand eine günstige Größenordnung aufweist, kann das neue Verfahren auch dann sehr effektiv durchgeführt werden, wenn die Substanz nicht mit einem optischen Rückschaltsignal aus dem zweiten Zustand zurück in den ersten Zustand überführbar ist.

Eine besonders bevorzugt Gruppe von Substanzen zur Verwendung bei dem neuen Verfahren sind sogenannte Förster-Resonanzenergietransfer-Paare, die üblicherweise kurz als FRET-Paare bezeichnet werden und die aus einem (Energie-) Donor und einem (Energie-) Akzeptor bestehen. Für die Verwendung bei dem neuen Verfahren sind primär solche FRET-Paare geeignet, bei denen der Akzeptor photochrom ist und mit dem Umschaltsignal geschaltet wird, um Fluoreszenzeigenschaften des Donors zu modulieren. Der Akzeptor kann dabei seinerseits fluoreszent sein, was dann aber bei dem neuen Verfahren in der Regel nicht ausgenutzt wird.

In den Fällen, in denen die interessierende Struktur in der Probe durch ein Protein definiert ist, ist es von Vorteil, wenn die Substanz, mit der die interessierende Struktur markiert wird, gentechnisch in das Molekül eingebaut oder an dieses angebaut wird. Dabei kann der Ein- bzw. Anbau direkt erfolgen, d. h. die markierende Substanz kann als solche im Sinne eines Fusionsproteins direkt in das Protein in der Probe eingesetzt oder an dieses angehängt werden. Es ist aber auch möglich, nur einen Anbindungsplatz für die markierende Substanz in das Protein einzusetzen oder an dieses anzuhängen, über den dann später die Markierung mit der Substanz erfolgen kann. Ein als solcher, grundsätzlich bekannter Anbindungsplatz für fluoreszente Proteine zur Markierung eines Proteins besteht beispielsweise aus der Folge von 4 Cysteinen in der Aminosäuresequenz des Proteins, d. h. aus einem so genannten Tetracystein-Motiv. Von besonderem Vorteil ist es, wenn das gentechnische Ein- bzw. Anbauen der Substanz bzw. des Anbindungsplatzes für die Substanz in bzw. an das Protein in der Probe durch Expression des derart modifizierten Proteins anstelle des ursprünglichen Proteins in mindestens einer Zelle innerhalb der Probe erfolgt, so dass die interessierende Struktur unmittelbar durch das mit der markierenden Substanz oder mit den Anbindungsplätzen für diese modifizierte Protein ausgebildet wird.

Die extrem hohe Ortsauflösung bei Lagebestimmung der Position der einzelnen Moleküle der markierenden Substanz in der Probe eröffnet die Möglichkeit, die räumliche Anordnung sehr kleiner Strukturen in der Probe zu beobachten. Eine solche Struktur kann aus einem einzigen Proteinmolekül bestehen, das dann an mehreren verschiedenen Punkten mit der Substanz zu markieren ist. Diese Punkte liegen ganz typischerweise in einem Abstand zusammen, der kleiner als die räumliche Auflösungsgrenze bei jeder denkbaren optischen Abbildung des Proteins ist. Bei dem neuen Verfahren wird das Messsignal von der Substanz zu einem Zeitpunkt jeweils nur an einem der Punkte, an dem das Proteinmolekül mit der Substanz markiert ist, abgefragt. Bei jeder Wiederholung der Abfrage wird mit dem Umschaltsignal die Substanz wieder nur an einem der Markierungspunkte in den das Messsignal abgebenden zweiten Zustand umgeschaltet. Dies kann zwar derselbe Punkt wie zuvor sein. Da aber dieser Vorgang durch Übergangswahrscheinlichkeiten gesteuert wird, kann bei einer hinreichend großen Anzahl an Wiederholungen der Abfrage fest davon ausgegangen werden, dass die Substanz an allen Markierungspunkten des Proteinmoleküls abgefragt und entsprechend die Lage aller markierten Punkte des Proteinmoleküls mit höchster Ortsauflösung bestimmt wird. Die Ortsauflösung ist dabei so groß, dass auch Proteinfaltungen und andere Konformationsänderungen von Proteinmolekülen beobachtbar sein werden.

Die Abbildung der gesamten mit der Substanz markierten Struktur erfordert bei dem neuen Verfahren eine vergleichsweise große Anzahl von Wiederholungen des Schaltens eines vergleichsweise kleinen Anteils der Substanz in den zweiten Zustand, in dem sie das Messsignal, das mit dem Sensorarray registriert wird, emittiert. Wenn diese Wiederholungen sehr schnell erfolgen, kann dennoch die für das Abbilden der interessierenden Struktur einer Probe insgesamt benötigte Zeit immer noch relativ kurz sein. Sie kann aber in jedem Fall dadurch verkürzt werden, dass das neue Verfahren mit mindestens zwei verschiedenen Substanzen, von denen in ihren jeweils zweiten Zustand unterscheidbare optische Messsignale ausgehen, parallel durchgeführt wird. Die Geschwindigkeit des neuen Verfahrens wird dadurch begrenzt, dass die Dichte der Moleküle der Substanz in dem zweiten Zustand, die einen ausreichenden Abstand voneinander aufweisen, und damit die Anzahl der Moleküle, deren Ortslagen in einem Zyklus des neuen Verfahrens bestimmt werden kann, naturgemäß beschränkt ist. Solange sich die optischen Messsignale von zwei verschiedenen die interessierte Struktur markierenden Substanzen soweit unterscheiden, dass sie sich trennen lassen, kann durch Einsatz derart verschiedener Substanzen die Anzahl der Moleküle, deren Ortslagen in einem Zyklus des neuen Verfahrens bestimmt wird, proportional zur Anzahl der unterschiedlichen Substanzen gesteigert werden.

Weiterhin wird hier ein Verfahren zum räumlich hochauflösenden Abbilden einer interessierenden Struktur einer Probe mit den Schritten offenbart:
- Auswählen einer Substanz aus einer Gruppe von Substanzen, die mit einem Umschaltsignal wiederholt aus einem ersten Zustand mit ersten optischen Eigenschaften in einen zweiten Zustand mit zweiten optischen Eigenschaften überführbar sind und die aus dem zweiten Zustand in den ersten Zustand zurückkehren können;
- Markieren der interessierenden Struktur der Probe mit der Substanz;
- Überführen wechselnder Anteile der Substanz mit dem Umschaltsignal in den zweiten Zustand;
- Abbilden der Probe auf ein Sensorarray, wobei eine räumliche Auflösungsgrenze der Abbildung größer (also schlechter) ist als ein mittlerer Abstand zwischen nächst benachbarten Molekülen der Substanz in der Probe; und
- Registrieren eines optischen Messsignals, das von dem jeweils in dem ersten Zustand verbliebenen Anteil der Substanz ausgeht, mit dem Sensorarray;
wobei beim Überführen des Anteils der Substanz in den zweiten Zustand eine Intensität des Umschaltsignals so eingestellt wird, dass mindestens 10 % der jeweils in dem ersten Zustand verbleibenden Moleküle der Substanz einen Abstand zu den ihnen nächst benachbarten Molekülen in dem ersten Zustand aufweisen, der größer als die räumliche Auflösungsgrenze der Abbildung der Probe auf das Sensorarray ist.

Dieses Verfahren stellt eine Inversion des im Patentanspruch 1 definierten Verfahrens dar. Konkret bedeutet dies, dass bei dem diesem Verfahren mit dem Sensorarray ein optisches Messsignal registriert wird, das nicht von den in den zweiten Zustand umgeschalteten Molekülen der Substanz ausgeht, sondern von den noch in dem ersten Zustand verbliebenen Molekülen der Substanz. Entsprechend besteht die erfindungsgemäße Ausgestaltung des Verfahrens hier darin, beim Überführen des Anteils der Substanz in den zweiten Zustand eine Intensität des Umschaltsignals so groß einzustellen, dass ein wesentlicher Prozentsatz der jeweils in dem ersten Zustand verbleibenden Moleküle einen Abstand zu den Ihnen nächst benachbarten Molekülen in dem ersten Zustand aufweist, der größer als die räumliche Auflösungsgrenze der Abbildung der Probe auf das Sensorarray ist. Unter Berücksichtigung dieses Unterschieds treffen alle voranstehenden Ausführungen zu bevorzugten Ausführungsformen des neuen Verfahrens nach dem Patentanspruch 1 auch auf dieses neue Verfahren zu. Der Unterschied macht sich dabei im Wesentlichen nur darin bemerkbar, dass die notwendige Intensität des Umschaltsignals mit zunehmender Konzentration der markierenden Substanz in der Probe nicht ab- sondern zunimmt, weil bei einer größeren Anzahl von Molekülen der Substanz in dem jeweils betrachteten Bereich mehr Moleküle in den zweiten Zustand überführt werden müssen, um nur die für das neue Verfahren tolerierbar geringe Dichte an Molekülen in dem ersten Zustand zu belassen. Diese letztgenannte Dichte ist unabhängig von der Konzentration der Moleküle in der Probe.

Ein Fluoreszenzlichtmikroskop zur Durchführung des neuen Verfahrens unterscheidet sich von bekannten Fluoreszenzmikroskopen, mit denen eine räumliche Auflösung besser als die Beugungsgrenze erreicht wird, dadurch, dass keine Maßnahmen zur Feinstrukturierung des Umschaltsignals von der Umschaltsignalquelle vorhanden sind, sondern dass statt dessen eine Steuerung der Schaltsignalquelle eine Intensität des Schaltsignals gemäß dem neuen Verfahren einstellt.

Zusätzlich kann mindestens ein Photodetektor vorhanden sein, auf den ein Bereich der Probe, der mehreren Pixeln des Sensorarrays entspricht, abgebildet wird, um die zeitliche Abfolge der Emission einzelner Photonen aus diesem Bereich zu beobachten. Wie bereits im Zusammenhang mit dem neuen Verfahren erläutert wurde, kann mit einem solchen Photodetektor sehr schnell, d. h. insbesondere noch vor dem Auslesen des Sensorarrays festgestellt werden, ob in dem jeweiligen Bereich die Intensität des Messsignals von nur einem oder mehreren Molekülen der Substanz registriert wird, um beispielsweise das Registrieren zugunsten eines neuen Versuchs abzubrechen, wenn nicht feststeht, dass die Intensität nur von einem einzelnen Molekül stammt. Dies ist insofern von größerer Bedeutung, als dass das Auslesen eines Sensorarrays häufig der geschwindigkeitsbegrenzende Faktor beim Abschluss eines Zyklus des neuen Verfahrens ist. Das Sensorarray muss ausgelesen sein, bevor mit dem Umschaltsignal eine neue Auswahl an Molekülen der Substanz getroffen werden kann, die sich dann in dem das Messsignal abgebenden Zustand befinden, so dass das Messsignal von dieser neuen Auswahl an Molekülen stammen kann. Für die Durchführung des neuen Verfahrens und das neue Fluoreszenzlichtmikroskop geeignete Sensorarrays umfassen CCD- und vorzugsweise CMOS-Sensorarrays üblicher Bauart, bei deren Auswahl aber neben der Möglichkeit eines schnellen Auslesens darauf zu achten ist, dass das Dunkel- und Ausleserauschen gering ausfällt, damit sich bei der Durchführung des neuen Verfahrens ein gutes Signal zu Rauschen-Verhältnis ergibt.

Das neue Fluoreszenzmikroskop zur Durchführung des neuen Verfahrens kann weiterhin eine separate Rückschaltsignalquelle zur Beaufschlagung der Probe mit einem Rückschaltsignal aufweisen. Bereits bei der Beschreibung des neuen Verfahrens wurde jedoch darauf hingewiesen, dass die Substanz, mit der die interessierende Struktur der Probe markiert ist, auch spontan, d. h. thermisch angeregt, aus ihrem zweiten Zustand in ihren ersten Zustand zurückkehren kann oder dass dieser Übergang auch durch das Anregungssignal ausgelöst werden kann, mit dem die Substanz primär zur Emission des Messsignals angeregt wird.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: skizziert den Aufbau eines Fluoreszenzlichtmikroskops in einer ersten Ausführungsform zur Durchführung des neuen Verfahrens zum räumlich hoch auflösenden Abbilden einer interessierenden Struktur einer Probe in einer ersten Ausführungsform.
- **Fig. 2**: skizziert eine dichte uniforme Verteilung von fluoreszierenden Molekülen einer die interessierende Struktur der Probe markierenden Substanz und die resultierende Intensitätsverteilung des Fluoreszenzlichts über dem entsprechenden Bereich eines Sensorarrays, auf den die Probe bei dem Fluoreszenzlichtmikroskop gemäß Fig. 1 abgebildet wird.
- **Fig. 3**: skizziert die Intensitätsverteilung des Messsignals über dem Sensorarray für den Fall eines einzelnen und zweier eng benachbarter Moleküle in einem Bereich der Probe.
- **Fig. 4**: ist ein Schnitt durch die Intensitätsverteilung über das Sensorarray gemäß Fig. 3, die dem einen Molekül entspricht.
- **Fig. 5**: ist ein Schnitt durch die Intensitätsverteilung des Messsignals über das Sensorarray gemäß Fig. 3, die den beiden dicht benachbarten Molekülen entspricht.
- **Fig. 6**: skizziert den Aufbau eines Lichtmikroskops in einer zweiten, gegenüber Fig. 1 um eine Rückschaltsignalquelle ergänzten Ausführungsform.
- **Fig. 7**: skizziert eine weitere Ausführungsform des Fluoreszenzlichtmikroskops, wobei hier gegenüber Fig. 1 ein Photodetektor ergänzt ist.
- **Fig. 8**: zeigt ein einzelnes Molekül in dem Beobachtungsbereich des Photodetektors gemäß Fig. 7.
- **Fig. 9**: skizziert die zeitliche Abfolge von Photonen des Messsignals, die der Photodetektor gemäß Fig. 7 von dem Molekül gemäß Fig. 8 empfängt.
- **Fig. 10**: skizziert zwei Moleküle in dem Beobachtungsbereich des Photodetektors gemäß Fig. 7.
- **Fig. 11**: skizziert die Abfolge von Photonen des Messsignals von den beiden Molekülen gemäß Fig. 10.
- **Fig. 12**: skizziert die zeitliche Abfolge der verschiedenen optischen Signale bei der Ausführungsform des Fluoreszenzlichtmikroskops gemäß Fig. 1.
- **Fig. 13**: skizziert die zeitliche Abfolge der verschiedenen optischen Signale bei der Ausführungsform des Fluoreszenzlichtmikroskops gemäß Fig. 6.
- **Fig. 14**: skizziert den Aufbau und die Funktion eines FRET-Paars aus Donor und Akzeptor, das als Substanz zur Markierung der interessierenden Struktur der Probe bei dem neuen Verfahren einsetzbar ist; und
- **Fig. 15**: skizziert die Markierung eines einzelnen Proteinmoleküls mit mehreren FRET-Paaren gemäß Fig. 14.

### FIGURENBESCHREIBUNG

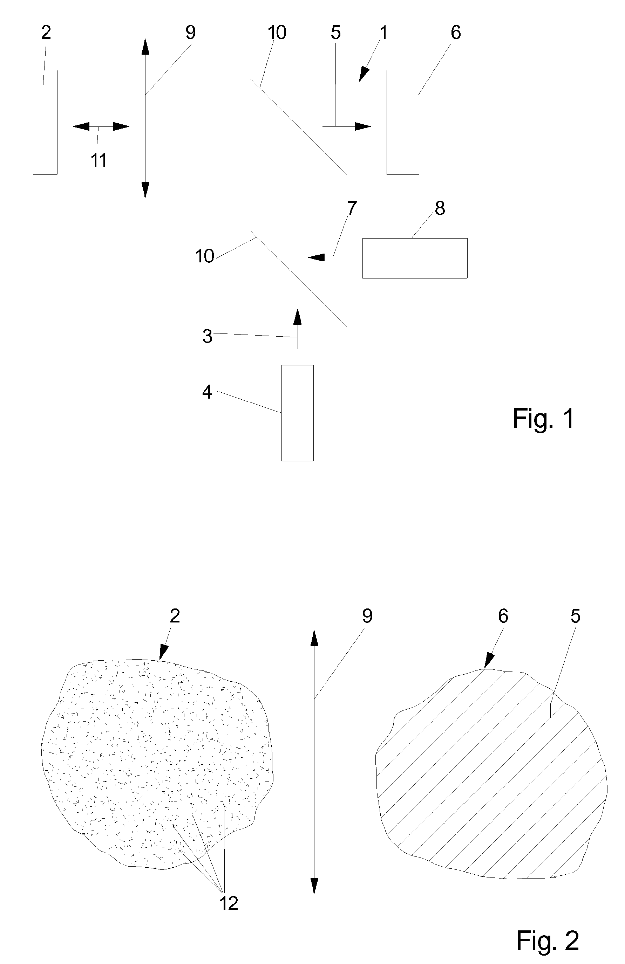

Das in **Fig. 1** skizzierte Fluoreszenzlichtmikroskop 1 dient zum räumlich hoch auflösenden Abbilden einer interessierenden Struktur innerhalb einer Probe 2. Die interessierende Struktur innerhalb der Probe 2, die hier nicht hervorgehoben dargestellt ist, ist mit einer Substanz markiert, deren Moleküle zwei Zustände aufweisen, und zwar einen ersten, in dem sie nicht fluoreszent sind, und einen zweiten, in dem sie durch ein optisches Anregungssignal 3 von einer Anregungssignalquelle 4 zur spontanen Emission von Fluoreszenzlicht angeregt werden, das als Messsignal 5 von einem Sensorarray 6 registriert wird. Zwischen dem ersten und dem zweiten Zustand sind die Moleküle der Substanz mit einem optischen Umschaltsignal 7 von einer Umschaltsignalquelle 8 umschaltbar. Dabei ist eine Steuerung der Umschaltsignalquelle 8, die hier nicht separat wiedergegeben ist, so ausgelegt, dass sie die Intensität des Umschaltsignals 7 so einstellt, dass jeweils nur so viel Moleküle der Substanz, mit der die interessierende Struktur der Probe 2 markiert ist, in dem zweiten Zustand sind, dass der Abstand der fluoreszierenden Moleküle in dem zweiten Zustand größer ist als eine räumliche Auflösungsgrenze bei der Abbildung der Probe 2 mit einer in Fig. 1 nur angedeuteten Abbildungsoptik 9 auf das Sensorarray 6. Dies ermöglicht es, die Ortslagen der in dem zweiten Zustand befindlichen Moleküle der Substanz in der Probe 2 aufgrund der ihnen zugehörigen Intensitätsverteilungen des Messsignals 5 über das Sensorarray 6 mit einer weit über die räumliche Auflösungsgrenze der Abbildung hinausgehenden Genauigkeit zu bestimmen, die neben der Größe der Moleküle der Substanz im Wesentlichen von der Dichte der Pixel des Sensorarrays 6, dem Abbildungsmaßstab und dem Signal-zu-Rausch-Verhältnis abhängt. Dabei kann die Ortsbestimmung den Pixelabstand des Sensorarrays 6 sogar unterschreiten. Die in Fig. 1 wieder nur angedeuteten halb durchlässigen Spiegel 10 dienen zum Überlagern der Strahlengänge des Anregungssignals 3 und des Umschaltsignals 7 bzw. zum Abtrennen des Messsignals 5, das von der Probe ausgeht. Zusätzlich werden hier in aller Regel schmalbandige Farbfilter eingesetzt sein, so dass von dem Sensorarray 6 nur das interessierende Messsignal 5 und keine von der Probe reflektierten Anteile des Anregungssignals 3 oder des Umschaltsignals 7 registriert werden. Ein Doppelpfeil 11 vor der Probe 2 deutet an, dass die Probe 2 sowohl mit optischen Signalen 3, 7 beaufschlagt wird, als auch das optische Messsignal 5 emittiert.

**Fig. 2** skizziert eine uniforme statistische Verteilung von Molekülen 12 der markierenden Substanz in der Probe 2. Die dargestellten Moleküle 12 befinden sich sämtlich in ihrem fluoreszierenden zweiten Zustand. Der Abstand der Moleküle 12 ist kleiner als die räumliche Auflösungsgrenze bei der Abbildung der Probe 2 mit der Abbildungsoptik 9 auf das Sensorarray 6. Konkret ist hier der Abstand der Moleküle 12 sogar viel kleiner als die Auflösungsgrenze. Hieraus resultiert eine Intensitätsverteilung des Messsignals 5 über das Sensorarray 6, die abgesehen von statistischen Schwankungen und Rauschen konstant ist, was in Fig. 2 durch eine gleichmäßige Schraffur des dargestellten Bereichs des Sensorarrays 6 symbolisiert ist. Die Bestimmung der Ortslage einzelner Moleküle 12 aus den mit dem Sensorarray 6 registrierten Messsignal 5 ist so nicht möglich. Auch eine in Fig. 2 nicht vorhandene Strukturierung der Verteilung der Moleküle 12 innerhalb der Probe 2 könnte bei derart gering beabstandeten Molekülen 12 in dem fluoreszierenden Zustand nur bis zur räumlichen Auflösungsgrenze der Abbildung der Probe 2 mit der Abbildungsoptik 9 auf das Sensorarray 6 aufgelöst werden. Bei dem neuen Verfahren, bei dem immer nur ein kleiner Anteil der Moleküle 12 in deren fluoreszenzfähigen Zustand überführt wird, ist die Dichte der überhaupt vorhandenen Moleküle irrelevant.

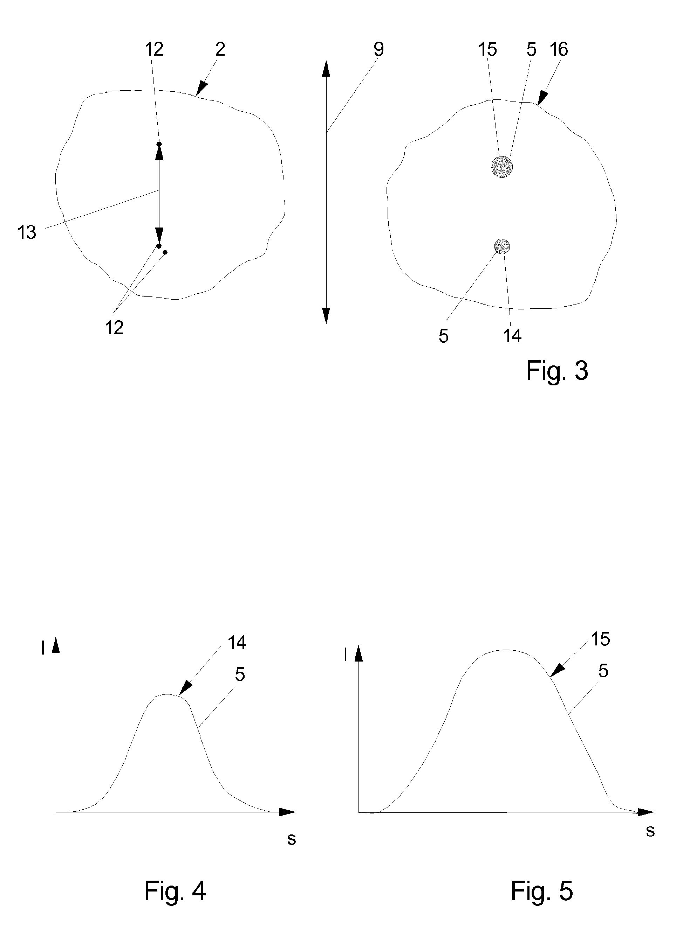

**Fig. 3** skizziert die Abbildung eines Bereichs der Probe 2 auf das Sensorarray 6 in dem sich insgesamt drei Moleküle 12 in dem fluoreszierenden zweiten Zustand befinden. Dabei liegen zwei der Moleküle 12 paarweise dicht beieinander, während der Abstand 13 des dritten Moleküls 12 von diesem Paar größer ist und zwar größer als die räumliche Auflösungsgrenze bei der Abbildung der Probe 2 der Abbildungsoptik 9 auf das Sensorarray 6. Der Abstand der beiden Moleküle 12 des Paars ist hingegen kleiner als die Auflösungsgrenze. Das von den Molekülen 12 ausgehende Fluoreszenzlicht registriert das Sensorarray 6 als zwei diskrete Intensitätsverteilungen 14 und 15 des Messsignals 5. Die Intensitätsverteilung 14 entspricht dabei dem einzelnen Molekül 12, während die Intensitätsverteilung 15 dem Paar von Molekülen 12 entspricht.

Schnitte durch die Intensitätsverteilungen 14 und 15 sind in den **Fig. 4** und **5** wiedergegeben. Die Intensitätsverteilungen unterscheiden sich in ihrer Form nicht wesentlich. Beide Intensitätsverteilungen sind grundsätzlich Airy-Scheiben. Die Intensitätsverteilung 15 weist jedoch ein doppelt so großes Integral wie die Intensitätsverteilung 14 und eine größere Halbwertsbreite auf. Aus der Intensitätsverteilung 14 kann die Ortslage des Moleküls 12 in der Probe 2 sehr genau und zwar insbesondere mit einer höheren Auflösung als der räumlichen Auflösungsgrenze der Abbildung der Probe 2 mit der Abbildungsoptik 9 auf das Sensorarray 6 ermittelt werden. Dabei kann aus der lateralen Lage der Intensitätsverteilung 14 auf dem Sensorarray 6 auf den Ort in der x-y-Ebene der Probe 2 geschlossen werden, während die Form der Intensitätsverteilung 14 Rückschlüsse auf die Ortslage in Z-Richtung innerhalb der Probe 2 zuläßt. Anders ist es mit der Intensitätsverteilung 15. Dieser kann zwar auch ein Ort in der Probe zugeordnet werden. Dies ist aber nur der mittlere Ort der beiden Moleküle 12 des Paars. Wo sich die beiden Moleküle 12 relativ zu dem mittleren Ort befinden, geht aus der Intensitätsverteilung 15 nicht hervor. Aus diesem Grund wird bei dem neuen Verfahren zum räumlich hoch auflösenden Abbilden einer mit der Substanz markierten Struktur der Probe 2 jeweils nur ein so geringer Anteil der Moleküle 12 mit dem Schaltsignal 7 gemäß Fig. 1 in den fluoreszierenden zweiten Zustand geschaltet, dass möglichst viele der Moleküle 12 einzeln, d. h. in einem so großen Abstand zu benachbarten Molekülen 12 vorliegen, dass sie beim Abbilden auf das Sensorarray 6 in diskrete Intensitätsverteilung 14 resultieren, aus denen jeweils exakt die Ortslage des Moleküls 12 bestimmbar ist.

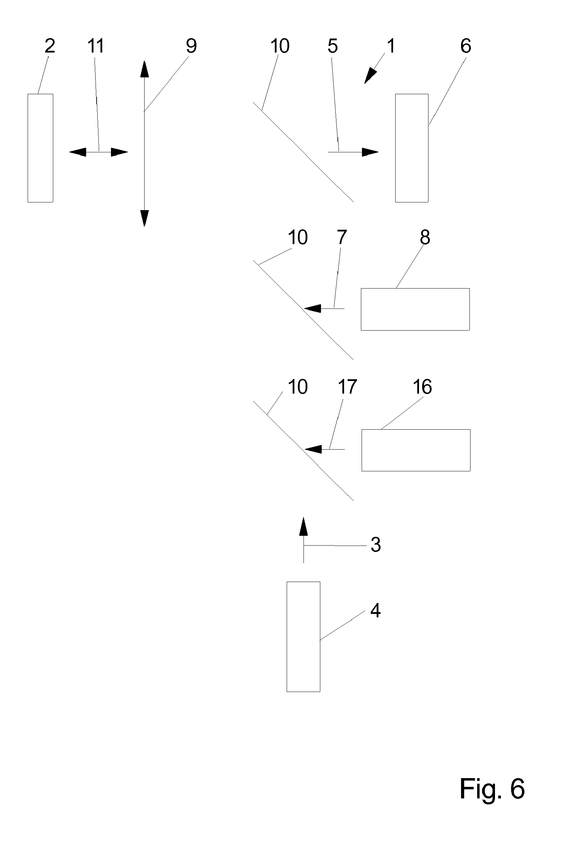

**Fig. 6** skizziert eine Ausführungsform des Fluoreszenzlichtmikroskops 1, die gegenüber der Ausführungsform gemäß Fig. 1 um eine Rückschaltsignalquelle 16 zur Beaufschlagung der Probe 2 mit einem Rückschaltsignal 17 ergänzt ist. Zum Überlagern des Strahlengangs des optischen Rückschaltsignals 17 ist ein weiterer halbdurchlässiger Spiegel 10 vorhanden. Mit dem Rückschaltsignal 17 werden die Moleküle der Substanz in der Probe 2 gezielt aus ihrem zweiten Zustand zurück in ihren ersten Zustand gebracht, um für die nächste Runde der Lagebestimmung einzelner Moleküle in der Probe 2 eine neue Auswahl an Molekülen mit dem Schaltsignal 7 zu treffen. Das neue Verfahren benötigt zur Ermittlung der Ortslage so vieler Moleküle, dass eine repräsentative Abbildung der mit ihnen markierten Struktur der Probe 2 erreicht wird, eine häufige Wiederholung der Auswahl einzelner Moleküle mit dem Umschaltsignal 7, wobei die zugrunde liegenden Übergangswahrscheinlichkeiten für immer wechselnde Selektionen sorgen, selbst wenn einzelne Moleküle mehrfach ausgewählt werden. Das Rückschaltsignal 17 wird nicht zwingend benötigt, wenn die Moleküle von selbst, d. h. durch thermische Anregung, binnen vertretbarer Zeit in Ihren ersten Zustand zurückgelangen oder auch durch Einwirkung des Anregungssignals 3. Anderenfalls ist das Rückschaltsignal 17 zwingend erforderlich.

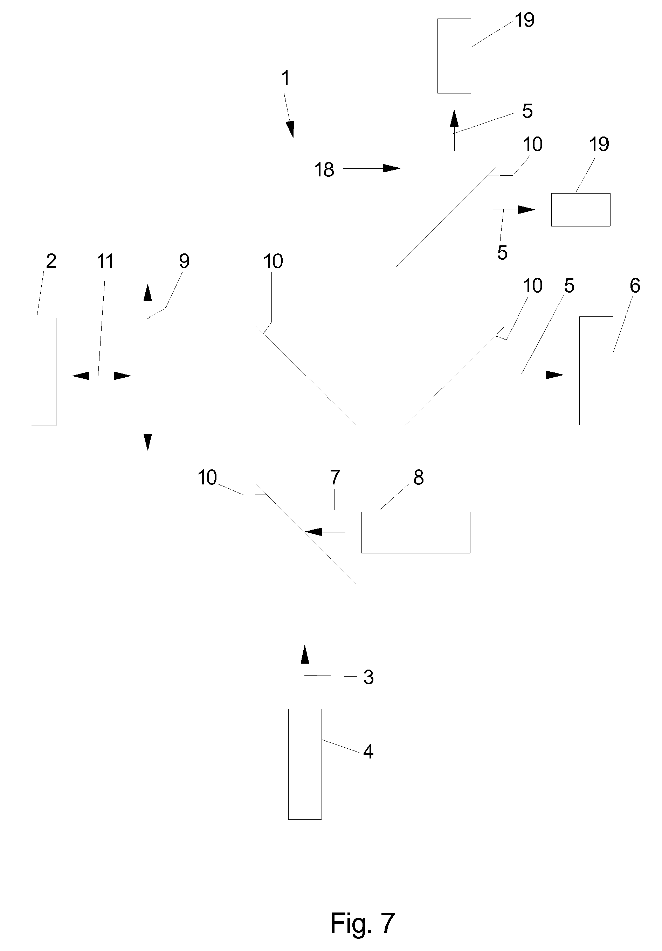

Das in **Fig. 7** skizzierte Fluoreszenzlichtmikroskop 1 weist die gemäß Fig. 6 ergänzte Rückschaltsignalquelle 16 nicht auf; sie könnte aber auch bei dieser Ausführungsform vorgesehen sein. Fig. 7 dient jedoch dazu, die zusätzliche Anordnung eines Photodetektors 18 zu erläutern. Der Photodetektor 18 ist dazu vorgesehen, die zeitliche Abfolge einzelner Photonen des Messsignals 5 zu registrieren, die aus einem Bereich der Probe stammen, der mehreren Pixeln des Sensorarrays 6 entspricht. Dabei soll diese Überwachung der Abfolge der Photonen dazu dienen, sehr schnell festzustellen, ob sich in dem jeweiligen Bereich nur ein einzelnes Molekül in dem fluoreszierenden Zustand befindet, oder ob mehrere Moleküle aus diesem Bereich Fluoreszenzlicht emittieren. Wenn es sich um mehrere Moleküle handelt, ist dies bei einer geringen Größe des Bereichs ein Hinweis darauf, dass die Intensitätsverteilungen des von ihnen ausgehenden Messlichts auf dem Sensorarray 6 nicht getrennt werden können, also nicht zu der Lagebestimmung einzelner Moleküle verwendet werden können. Entsprechend kann die Registrierung des Messsignals 5 mit dem Sensorarray 6 zugunsten einer neuen Auswahl von Molekülen mit dem Umschaltsignal 7 abgebrochen werden. Zumindest kann auf ein Auslesen der entsprechenden Bereiche des Sensorarrays 6 verzichtet werden. Z. B. in diesem Fall ist es sinnvoll, Photosensoren 18 für verschiedene Bereiche der Probe 2 bzw. des Sensorarrays 6 in Form eines weiteren Arrays mit einer jedoch geringeren Pixelanzahl vorzusehen. Konkret ist der Photodetektor 18 in Fig. 7 als Koinzidenzdetektoranordnung ausgebildet, wobei zwei Detektoreinheiten 19 mit Hilfe eines halbdurchlässigen Spiegels 10 als Strahlteiler paralle geschaltete sind. Die Koinzidenzdetektoranordnung detektiert solche Fälle, in denen sehr zeitnah zueinander Photonen des Messlichts 15 auf beide Detektoreinheiten 19 auftreffen, d. h. Koinzidenzen von Photonen. Solche Koinzidenzen können bei einem einzigen fluoreszierenden Molekül in dem von dem Photodetektor 18 erfassten Bereich der Probe 2 nicht auftreten, da ein einzelnes fluoreszierendes Molekül aufgrund seiner Anregung immer nur ein einzelnes Photon aussenden kann und die Aussendung des nächsten Photons erst in Folge seiner nächsten Anregung möglich ist, wobei zwischen den einzelnen Anregungen eine Mindestzeit liegt.

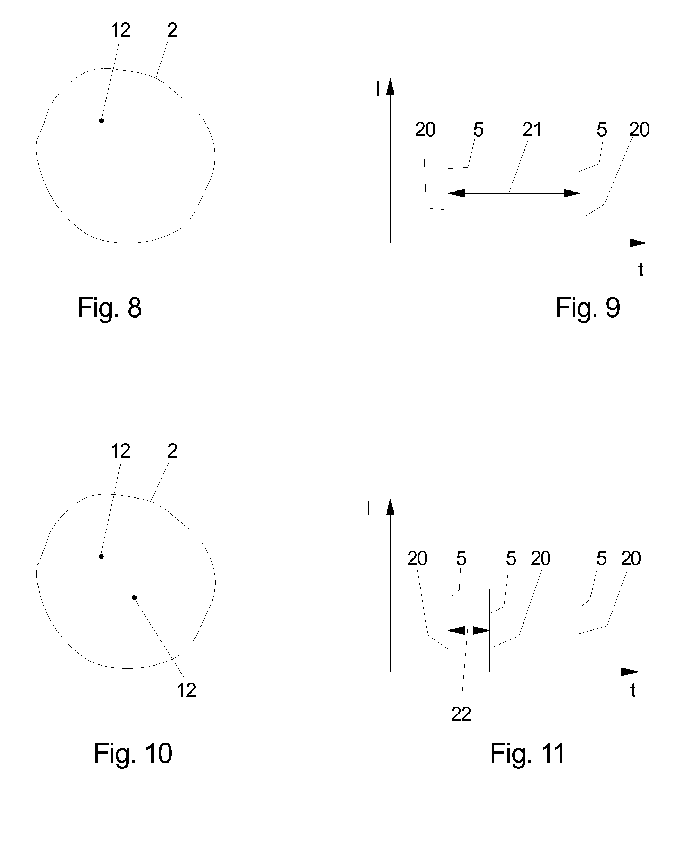

Diese Zusammenhänge werden noch einmal anhand der **Fig. 8 bis 11** erläutert. Fig. 8 zeigt ein einzelnes Molekül, das gemäß Fig. 9 Photonen 20 des Messsignals 5 emittiert, die einen zeitlichen Mindestabstand 21 aufweisen. Wenn jedoch mit dem Photodetektor 18 gemäß Fig. 7 eine zeitliche Abfolge von Photonen 20 des Messsignals 5 registriert wird, wie sie in Fig. 11 skizziert ist, und bei der ein zeitlicher Abstand 22 zwischen zwei Photonen 20 auftritt, der viel kleiner als der Abstand 21 gemäß Fig. 9 ist, weist dies auf mindestens zwei fluoreszierende Moleküle 12 in dem Bereich hin, aus dem das Messsignal 5 stammt. Dieser Fall ist in Fig. 10 skizziert.

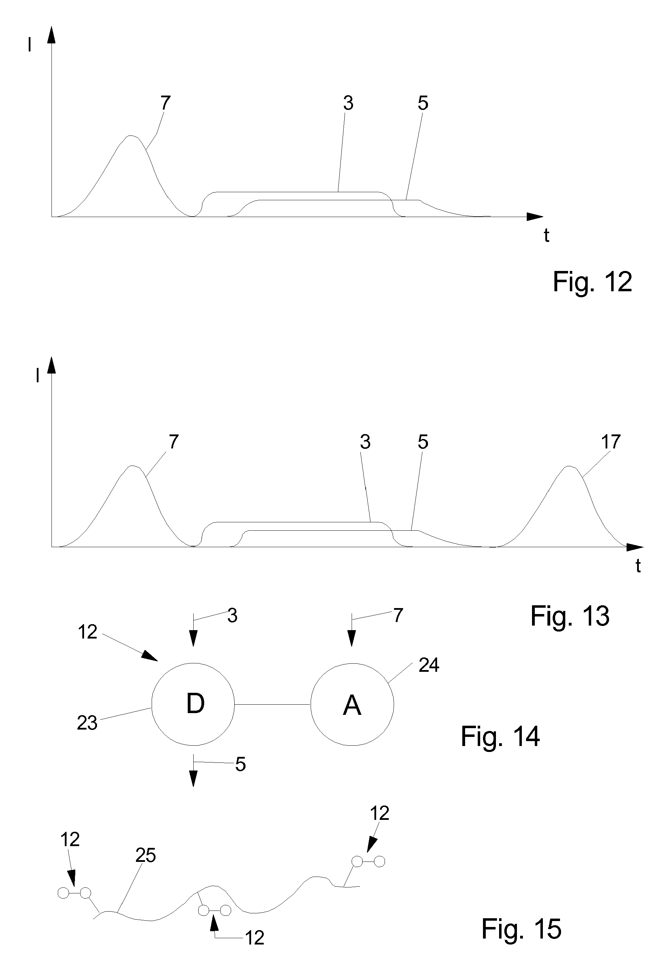

Fig. 12 ist eine Auftragung der zeitlichen Abfolge des Umschaltsignals 7 des Anregungssignals 3 und des Messsignals 5 bei der Ausführungsform des Fluoreszenzlichtmikroskops gemäß Fig. 1. Dabei ist zu betonen, dass die Signalsformen hier nur sehr schematisch und nicht unbedingt realitätsgerecht wiedergegeben sind. Dargestellt werden soll im wesentlichen die zeitliche Abfolge, bei der zunächst mit dem Umschaltsignal 7 bestimmt Moleküle der Substanz in den zweiten Zustand überführt werden, die dann mit dem Anregungssignal 3 zu Fluoreszenz angerecht werden. Diese Fluoreszenz führt zu dem Messsignal 5, das nach dem Erlöschen des Anregungssignals 3 abklingt. Fig. 12 skizziert nur einen einzelnen Zyklus des mit dem Fluoreszenzlichtmikroskop 1 durchgeführten Verfahrens. Der nächste Zyklus mit derselben Signalabfolge beginnt, sobald die Moleküle der Substanz aus dem zweiten Zustand durch thermische Anregung oder auch durch das Anregungssignal 3 in ihren ersten Zustand zurückgekehrt sind.

Bei der Signalabfolge gemäß Fig. 13, die der Ausführungsform des Fluoreszenzlichtmikroskops 1 gemäß Fig. 6 entspricht, kann sich der nächste Zyklus des Verfahrens mit dem nächsten Umschaltsignal 7 sofort anschließen, weil am Ende jedes Zyklus das Rückschaltsignal 17 erfolgt, das die Moleküle der Substanz in jedem Fall in ihren ersten Zustand zurückführt.

Fig. 14 skizziert ein FRET-Paar aus einem Donor 23 und einem Akzeptor 24, die Untereinheiten eines Moleküls 12 bilden. Der Donor 23 und der Akzeptor 24 können Proteine sein, die zu dem Molekül 12 fusioniert sind. Konkret kann der Akzeptor ein als Dronpa bekanntes Protein sein, während es sich bei dem Donor um ein Protein des ECFP-Typs handeln kann. Die Funktion des FRET-Paars gemäß Fig. 14 bei dem neuen Verfahren ist wie folgt. Der Akzeptor 24 ist photochrom und ändert aufgrund des Umschaltsignals 7 sein Absorptionsspektrum. Diese Verschiebung bei dem Absorptionsspektrum des Akzeptors 24 führt zu einer Veränderung des Fluoreszenzverhaltens des Donors 23. Konkret wird der Donor 23 fluoreszent, weil durch die Änderung des Absorptionsspektrums des Akzeptors 24 ein Energietransfer von dem Donor auf den Akzeptor in Folge einer Anregung des Donors durch das Anregungssignal 3 nicht mehr möglich ist und die Abregung des Donors nun vermehrt über die Emission von Fluoreszenzlicht, d. h. des Messsignals 5 erfolgen kann.

Fig. 15 skizziert, dass mit mehreren Molekülen 12 ein größeres Protein 25 auch an mehreren Punkten markiert werden kann, um beispielsweise Konformationsänderungen des Proteins 25, wie Faltungen, mit dem neuen Verfahren zu beobachten. Typischerweise liegen die Punkte, an denen die Moleküle 12, die hier in Form des FRET-Paars gemäß Fig. 14 skizziert sind, dichter beieinander als eine mögliche räumliche Auflösungsgrenze bei der optischen Abbildung des Proteins 25. Bei dem neuen Verfahren wird jedoch immer nur eines der Moleküle 12 an dem Protein 25 in den fluoreszenzfähigen Zustand überführt und dann seine Ortslage aufgrund des von ihm ausgehenden Messsignals exakt bestimmt. Dieser Vorgang wird vielfach wiederholt, wobei die Auswahl des jeweiligen Moleküls 12, dessen Ortslage exakt bestimmt wird, statistischen Gesetzen folgt, so dass bei der begrenzten Anzahl der Moleküle 12 an dem Protein 25 nach wenigen Wiederholungen alle Proteine 12 abgefragt sind, auch wenn die Auswahl jedes einzelne Mal nur von Übergangswahrscheinlichkeiten bestimmt wird.

### BEZUGSZEICHENLISTE

- 1: Fluoreszenzlichtmikroskop
- 2: Probe
- 3: Anregungssignal
- 4: Anregungssignalquelle
- 5: Messsignal
- 6: Sensorarray
- 7: Umschaltsignal
- 8: Umschaltsignalquelle
- 9: Abbildungsoptik
- 10: Halbdurchlässiger Spiegel
- 11: Doppelpfeil
- 12: Molekül
- 13: Abstand
- 14: Intensitätsverteilung
- 15: Intensitätsverteilung
- 16: Rückschaltsignalquelle
- 17: Rückschaltsignal
- 18: Photodetektor
- 19: Detektoreinheit
- 20: Photon
- 21: Abstand
- 22: Abstand
- 23: Donor
- 24: Akzeptor
- 25: Protein

## Patentansprüche

1. Verfahren zum räumlich hochauflösenden Abbilden einer interessierenden Struktur einer Probe, mit den Schritten:
- Auswählen einer Substanz aus einer Gruppe von Substanzen, die mit einem optischen Umschaltsignal wiederholt aus einem ersten Zustand mit ersten optischen Eigenschaften in einen zweiten Zustand mit zweiten optischen Eigenschaften, in dem sie mit einem optischen Anregungssignal (3) zur spontanen Emission von Fluoreszenzlicht anregbar sind, überführbar sind und die aus dem zweiten Zustand in den ersten Zustand zurückkehren können;
- Markieren der interessierenden Struktur der Probe mit der Substanz;
- Überführen wechselnder Anteile der Substanz mit dem Umschaltsignal in den zweiten Zustand;
- Anregen der Substanz in dem zweiten Zustand durch das optische Anregungssignal (3) zur spontanen Emission von Fluoreszenzlicht,
- Abbilden der Probe auf ein Sensorarray, wobei eine räumliche Auflösungsgrenze der Abbildung größer (also schlechter) ist als ein mittlerer Abstand zwischen nächst benachbarten Molekülen der Substanz in der Probe; und
- räumlich aufgelöstes Registrieren des spontan emittierten Fluoreszenzlichts als ein optisches Messsignal, das von dem jeweiligen Anteil der Substanz in dem zweiten Zustand ausgeht, mit dem Sensorarray;
**dadurch gekennzeichnet, dass** beim Überführen des Anteils der Substanz in den zweiten Zustand eine Intensität des Umschaltsignals (7) so eingestellt wird, dass mindestens 10 % der jeweils in den zweiten Zustand überführten Moleküle (12) der Substanz einen Abstand zu den ihnen nächst benachbarten Molekülen (12) in dem zweiten Zustand aufweisen, der größer als die räumliche Auflösungsgrenze der Abbildung der Probe (2) auf das Sensorarray (6) ist;
dass das von den Molekülen (12) in dem zweiten Zustand, die einen kleineren Abstand voneinander aufweisen, ausgehende Messsignal (5) von dem Messsignal (5) getrennt wird, das von den Molekülen (12) in ausreichendem Abstand zueinander ausgeht, und dass nur für den Fall dass eine Entsprechung zu einem einzelnen Molekül (12) vorliegt, eine Bestimmung der Ortslage dieses Moleküls aus der Intensitätsverteilung des Messsignals über das Sensorarray (6) erfolgt.

2. Verfahren nach Anspruch 1, **dadurch gekennzeichnet, dass** das von den Molekülen (12) in dem zweiten Zustand, die den kleineren Abstand voneinander aufweisen, ausgehende Messsignal (5) von dem Messsignal (5) getrennt wird, das von den Molekülen (12) in dem ausreichenden Abstand zueinander ausgeht, indem geprüft wird, ob die Form und/oder die Fläche der Intensitätsverteilung des Messsignals (5) über dem Sensorarray einem einzelnen oder mehreren Molekülen (12) entspricht.

3. Verfahren nach Anspruch 1 oder 2, **dadurch gekennzeichnet, dass** die Substanz aus einer Gruppe von Substanzen ausgewählt ist, die spontan, d. h. thermisch angeregt, aus ihrem zweiten Zustand in ihren ersten Zustand zurückkehren können oder dass dieser Übergang auch durch das Anregungssignal ausgelöst werden kann, oder dass die Substanz aus einer Untergruppe von Substanzen ausgewählt wird, die mit einem optischen Rückschaltsignal (17) aus dem zweiten Zustand zurück in den ersten Zustand überführbar sind, und dass vor dem Überführen eines anderen Anteils der Substanz mit dem Umschaltsignal (7) in den zweiten Zustand der zuvor in den zweiten Zustand überführte Anteil der Substanz mit dem Rückschaltsignal (17) in den ersten Zustand zurück überführt wird.

4. Verfahren nach einem der Ansprüche 1 bis 3, **dadurch gekennzeichnet, dass** beim Überführen des Anteils der Substanz in den zweiten Zustand die Intensität des Umschaltsignals so eingestellt wird, dass mindestens 25 %, vorzugsweise mindestens 33 %, weiter bevorzugt mindestens 50 %, noch weiter bevorzugt mindestens 66 %, mehr bevorzugt mindestens 90 %, noch mehr bevorzugt mindestens 95 % und am meisten bevorzugt mindestens 98 % der jeweils in den zweiten Zustand überführten Moleküle (12) der Substanz einen Abstand zu den ihnen nächst benachbarten Molekülen in dem zweiten Zustand aufweisen, der größer als die räumliche Auflösungsgrenze der Abbildung der Probe (2) auf das Sensorarray (6) ist.

5. Verfahren nach einem der Ansprüche 1 bis 4, **dadurch gekennzeichnet, dass** die Intensität des Umschaltsignals (7) über einen Bereich, der größere Abmessungen als die räumliche Auflösungsgrenze der Abbildung der Probe (2) auf das Sensorarray (6) aufweist, auf einen konstanten Wert eingestellt wird, wobei der konstante Wert optional in Abhängigkeit von einer lokalen Konzentration der Substanz in der Probe (2) festgelegt wird.

6. Verfahren nach Anspruch 5, **dadurch gekennzeichnet, dass** die lokale Konzentration der Substanz in der Probe (2) vorab unter Überführen eines größeren Anteils der Substanz in den zweiten Zustand bestimmt wird, wobei eine größere Intensität des Umschaltsignals (7) eingestellt wird als bei der Positionsbestimmung der einzelnen Moleküle (12) mit dem Sensorarray (6).

7. Verfahren nach einem der Ansprüche 1 bis 6, **dadurch gekennzeichnet, dass** ein Bereich der Probe (2), der mehreren Pixeln des Sensorarrays (6) entspricht, auf einen Photodetektor (18) abgebildet wird, um die zeitliche Abfolge der Emission einzelner Photonen (20) aus dem Bereich zu beobachten.

8. Verfahren nach einem der Ansprüche 1 bis 7, **dadurch gekennzeichnet, dass** die Substanz aus einer Untergruppe von Substanzen ausgewählt wird, die in ihrem ersten Zustand nicht fluoreszent sind.

9. Verfahren nach einem der Ansprüche 1 bis 8, **dadurch gekennzeichnet, dass** die Substanz aus Förster-Resonanzenergietransfer-(FRET)-Paaren mit einem Donor (23) und einem Akzeptor (24) ausgewählt wird, wobei der Akzeptor (24) photochrom ist und mit dem Umschaltsignal (7) geschaltet wird, um Fluoreszenzeigenschaften des Donors (23) zu modulieren.

10. Verfahren nach einem der Ansprüche 1 bis 9, **dadurch gekennzeichnet, dass** die Substanz oder mindestens ein Bindungsplatz für die Substanz gentechnisch in ein Protein in der Probe (2) eingebaut oder an dieses angebaut wird.

11. Verfahren nach einem der Ansprüche 1 bis 10, **dadurch gekennzeichnet, dass** ein Proteinmolekül (25) in der Probe (2) an mehreren verschiedenen Punkten mit der Substanz markiert wird und/oder dass das Verfahren mit mindestens zwei verschiedenen Substanzen, von denen in ihrem jeweils zweiten Zustand unterscheidbare optische Messsignale (5) ausgehen, parallel durchgeführt wird.

12. Verfahren nach einem der Ansprüche 1 bis 11, **dadurch gekennzeichnet, dass** das Umschaltsignal keine räumliche Strukturierung im Bereich der Probe (2) aufweist.

13. Verfahren nach einem der Ansprüche 1 bis 12, **dadurch gekennzeichnet, dass** die Ortslagen der in dem zweiten Zustand befindlichen Moleküle (12) der Substanz in der Probe (2), deren Abstand größer ist als eine räumliche Auflösungsgrenze bei der Abbildung der Probe (2), aufgrund der ihnen zugehörigen Intensitätsverteilungen (14) des Messsignals (5) über das Sensorarray (6) mit einer über die räumliche Auflösungsgrenze der Abbildung hinausgehenden Genauigkeit bestimmt werden, wobei optional mittels der Form der Intensitätsverteilung (14) auf die Ortslage in Z-Richtung innerhalb der Probe (2) rückgeschlossen wird.

14. Verfahren nach einem der Ansprüche 1 bis 13, **dadurch gekennzeichnet, dass** die mit der Substanz markierte Struktur der Probe (2) mit jedem Umschaltzyklus mit immer höherer Dichte nach der Position einzelner Moleküle (12) der Substanz abgefragt wird und dass aus der Summe der bestimmten Positionen der Moleküle (12) die Abbildung der Struktur gewonnen wird, die die Ortsauflösung jenseits der Beugungsgrenze aufweist.

15. Fluoreszenzlichtmikroskop mit einer Anregungssignalquelle und einer Umschaltsignalquelle zur Beaufschlagung einer Probe mit einem Anregungssignal und einem optischen Umschaltsignal, wobei das Umschaltsignal eine Substanz in der Probe aus einem ersten Zustand mit ersten optischen Eigenschaften in einen zweiten Zustand mit zweiten optischen Eigenschaften, in dem die Substanz mit dem optischen Anregungssignal zur spontanen Emission von Fluoreszenzlicht anregbar ist, überführt, mit einem Sensorarray zum Registrieren eines optischen Messsignals von der Probe und mit einer Abbildungsoptik zum Abbilden der Probe auf das Sensorarray, wobei ein Rastermaß von Pixeln des Sensorarrays kleiner als die räumliche Auflösungsgrenze der Abbildung der Probe auf das Sensorarray mal dem Abbildungsfaktor der Abbildung ist, **dadurch gekennzeichnet, dass** eine Steuerung der Umschaltsignalquelle (8) eine Intensität des Umschaltsignals (7) so steuert, dass beim Überführen der Substanz in den zweiten Zustand mindestens 10 % der jeweils in den zweiten Zustand überführten Moleküle (12) der Substanz einen Abstand zu den ihnen nächst benachbarten Molekülen (12) in dem zweiten Zustand aufweisen, der größer als die räumliche Auflösungsgrenze der Abbildung der Probe (2) auf das Sensorarray (6) ist, und dass das Fluoreszenzlichtmikroskop so ausgebildet ist, dass es das von den Molekülen (12) in dem zweiten Zustand, die einen kleineren Abstand voneinander aufweisen, ausgehende Messsignal (5) von dem Messsignal (5) getrennt wird, das von den Molekülen (12) in ausreichendem Abstand zueinander ausgeht, und dass nur für den Fall dass eine Entsprechung zu einem einzelnen Molekül (12) vorliegt, eine Bestimmung der Ortslage dieses Moleküls aus der Intensitätsverteilung des Messsignals über das Sensorarray (6) erfolgt.
